# FASCICULE DE BREVET EUROPEEN

(11) **EP 2 554 481 B1**
(45) Date de publication et mention de la délivrance du brevet: **14.10.2015**
(21) Numéro de dépôt: 12305939.6
(22) Date de dépôt: 31.07.2012
(51) Int. Cl.: B64D 33/02, F01D 21/04, F01D 25/24, F02C 7/04

(54) **Dispositif de liaison plus particulièrement adapté pour assurer la liaison entre une entrée d'air et une motorisation d'une nacelle d'aéronef**
Speziell angepasste Verbindungsvorrichtung zur Sicherstellung der Verbindung zwischen einem Lufteinlass und der Motorisierung einer Luftfahrzeuggondel
Linking device more specifically suited to providing the link between an air intake and an engine of an aircraft nacelle

(30) Priorité: 05.08.2011 FR 1157203
(43) Date de publication de la demande: 06.02.2013
(73) Titulaire: Airbus Opérations SAS, 31060 Toulouse (FR)
(72) Inventeur: Porte, Alain, 31770 Colomiers (FR); Lambert, David, 31270 Cugnaux (FR); Le Flem, Franck, 31480 Lagraulet Saint Nicolas (FR)
(74) Mandataire: Fantin, Laurent

(56) Documents cités:
- EP-A1- 1 591 643
- EP-A2- 1 357 279
- FR-A1- 2 936 223
- US-A1- 2004 101 384

## Description

La présente invention se rapporte à une nacelle d'aéronef intégrant un dispositif de liaison permettant d'assurer la liaison entre une entrée d'air et une motorisation tout en limitant la propagation des déformations entre les deux éléments assemblés, notamment selon la direction radiale.

Un ensemble propulsif d'aéronef comprend une nacelle dans laquelle est disposée de manière sensiblement concentrique une motorisation reliée par l'intermédiaire d'un mât au reste de l'aéronef.

FR 2 936 223 divulgue les caractéristiques de la préambule de la revendication 1.

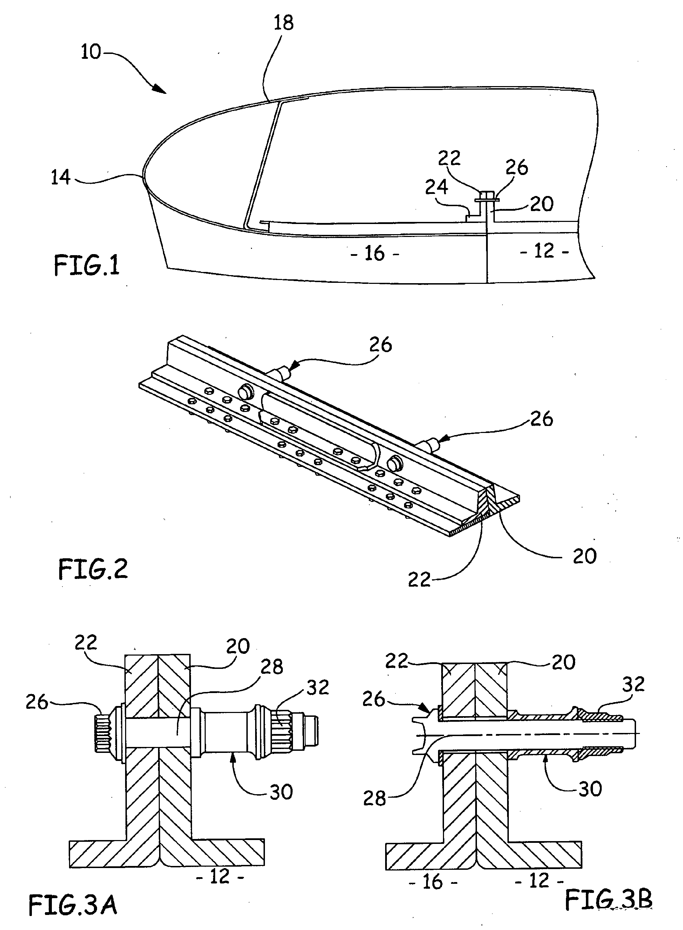

Comme illustré sur la figure 1, la nacelle comprend à l'avant une entrée d'air 10 permettant de canaliser un flux d'air en direction de la motorisation 12.

L'entrée d'air 10 comprend une lèvre 14 dont la surface en contact avec les flux aérodynamiques est prolongée à l'intérieur de la nacelle par un conduit intérieur 16 et à l'extérieur de la nacelle par une paroi extérieure 18.

L'entrée d'air 10 est reliée à la motorisation 12 par un dispositif de liaison illustré en détails sur les figures 2, 3A et 3B. Ce dispositif de liaison comprend au niveau de la motorisation une première collerette annulaire 20 solidarisée à une seconde collerette annulaire 22 d'un panneau délimitant le conduit 16 ou d'une pièce intercalaire 24, appelée bride, reliée au panneau délimitant le conduit 16, comme illustré sur la figure 2. Les deux collerettes 20 et 22 sont plaquées l'une contre l'autre et maintenues ainsi par des éléments de liaison 26, par exemple des boulons ou des rivets, qui traversent les collerettes 20, 22 et s'étendent parallèlement à l'axe longitudinal de la nacelle.

Selon un mode de réalisation illustré sur la figure 3A, les boulons ou rivets 26 comprennent une tige 28 dont le diamètre peut être ajusté à celui des trous de passage ménagés dans les collerettes annulaires 20 et 22.

Selon un second mode de réalisation illustré sur la figure 3B, le diamètre des trous de passage ménagés dans les collerettes annulaires 20 et 22 peut être légèrement supérieur à celui de la tige 28 des boulons ou rivets 26. Ce jeu d'environ 1 mm entre les trous de passage et les boulons ou rivets 26 autorise un mouvement relatif entre les deux éléments reliés.

Dans les deux cas, les trous de passage sont cylindriques.

Le dispositif de liaison et plus particulièrement les boulons ou rivets 26 sont dimensionnés pour pallier aux éventuels risques d'incidents, comme par exemple le bris d'une pale de la soufflante.

Dans ce cas, le conduit de la motorisation peut se déformer sur toute ou une partie de sa périphérie. Lors de ces déformations, les trous de passage de la collerette annulaire de la motorisation ne sont plus disposés au droit de ceux de l'entrée d'air. Dans cette configuration, les boulons ou rivets 26 subissent notamment des contraintes de cisaillement relativement importantes, nettement supérieures aux contraintes subies en fonctionnement normal. Même si le second mode de réalisation autorise un mouvement relatif entre les deux pièces reliées en raison du jeu présent autour des boulons ou rivets 26, ce jeu est nettement inférieur au mouvement relatif entre les deux pièces reliées en cas d'incident comme le bris d'une pale. Dans le cas du second mode de réalisation avec jeu, on constate que les contraintes de cisaillement sont au moins égales à celles présentes pour le premier mode de réalisation voire supérieures.

Pour résister à de telles contraintes, le dispositif de liaison comprend un nombre donné de boulons ou rivets 26 avec un diamètre donné.

Compte tenu de la résistance d'un boulon ou rivet 26 dans un montage conforme aux modes de réalisation illustrés sur les figures 3A et 3B, cela conduit à prévoir pour le dispositif de liaison un grand nombre de boulons ou rivets 26 et/ou des boulons ou rivets 26 avec un diamètre important, ce qui engendre une masse embarquée plus importante et par conséquent une consommation énergétique plus importante de l'aéronef.

Selon une autre problématique, les déformations du conduit de la motorisation tendent à se propager en direction du conduit 16 de l'entrée d'air. Par conséquent, il est nécessaire de tenir compte de ces éventuelles déformations lors de la conception du conduit 16 de l'entrée d'air qui est généralement en matériau composite et intègre un système de traitement acoustique.

Pour limiter la propagation des déformations de la collerette annulaire 20 de la motorisation vers la collerette 22 de l'entrée d'air, il est possible de prévoir un filtre au niveau des éléments de liaison 26. Pour chaque dispositif de liaison, ce filtre comprend au moins un fourreau déformable 30 enfilé sur la tige 28 de l'élément de liaison 26. Selon l'exemple illustré sur la figure 3A, le fourreau déformable 30 est intercalé entre la collerette annulaire 20 reliée à la motorisation et un écrou 32 de l'élément de liaison 26. Ce fourreau déformable 30 a un diamètre intérieur ajusté à celui de la tige 28 et comprend en partie centrale une épaisseur relativement faible de manière à pouvoir se déformer, notamment par flambage. Cet agencement permet d'augmenter l'énergie absorbée par déformation du dispositif de liaison. Il permet également de limiter la propagation des déformations selon la direction axiale.

Toutefois en cas de bris d'une pale, les déformations les plus importantes sont orientées selon la direction radiale. Or, les effets du fourreau déformable 30 selon cette direction sont limités.

Aussi, la présente invention vise à proposer un dispositif de liaison plus particulièrement adapté pour relier une motorisation et une entrée d'air d'une nacelle d'aéronef permettant de limiter la propagation des déformations entre les deux éléments assemblés, notamment selon la direction radiale.

A cet effet, l'invention a pour objet une nacelle d'aéronef comme définit dans la revendication 1 comprenant un premier conduit d'une entrée d'air et un second conduit d'une motorisation, les deux conduits étant disposés bout à bout et reliés par un dispositif de liaison comportant une collerette annulaire reliée à l'entrée d'air, une collerette annulaire reliée à la motorisation plaquée contre ladite collerette annulaire de l'entrée d'air, une pluralité de trous de passage ménagés dans les collerettes annulaires et disposés au droit les uns des autres et des premiers éléments de liaison dont les tiges sont logées dans les trous de passage, permettant de relier lesdites collerettes annulaires, **caractérisée en ce que** pour au moins un premier élément de liaison, le trou de passage d'une des collerettes annulaires a un diamètre nettement supérieur à celui de la tige permettant un débattement de ladite tige en cas de déformation d'un des deux conduits et en ce qu'une cornière est intercalée entre le premier élément de liaison et une portion cylindrique adjacente à ladite collerette annulaire, ladite cornière étant reliée à la portion de cylindre adjacente par l'intermédiaire d'au moins un second élément de liaison comportant un moyen pour amortir d'éventuelles déformations selon la direction radiale.

D'autres caractéristiques et avantages ressortiront de la description qui va suivre de l'invention, description donnée à titre d'exemple uniquement, en regard des dessins annexés sur lesquels :
- la figure 1 est une coupe schématique selon un plan radial d'une partie de l'avant d'une nacelle d'aéronef,
- la figure 2 est une vue en perspective illustrant une partie d'une liaison entre un moteur et une entrée d'air d'une nacelle d'aéronef selon l'art antérieur,
- la figure 3A est une coupe illustrant un élément de liaison entre un moteur et une entrée d'air d'une nacelle d'aéronef selon un premier mode de réalisation de l'art antérieur,
- la figure 3B est une coupe illustrant un élément de liaison entre un moteur et une entrée d'air d'une nacelle d'aéronef selon un autre mode de réalisation de l'art antérieur,
- la figure 4A est une vue en perspective d'une partie de la liaison entre un moteur et une entrée d'air d'une nacelle d'aéronef selon l'invention,
- la figure 4B est une vue latérale de la partie de la liaison visible sur la figure 4A après déformation,
- la figure 5A est une coupe d'une liaison entre un moteur et une entrée d'air d'une nacelle d'aéronef selon une première variante de l'invention,
- la figure 5B est une coupe de la liaison illustrée sur la figure 5A après déformation,
- la figure 6A est une coupe d'une liaison entre un moteur et une entrée d'air d'une nacelle d'aéronef selon une autre variante de l'invention, et
- la figure 6B est une coupe de la liaison illustrée sur la figure 6A après déformation.

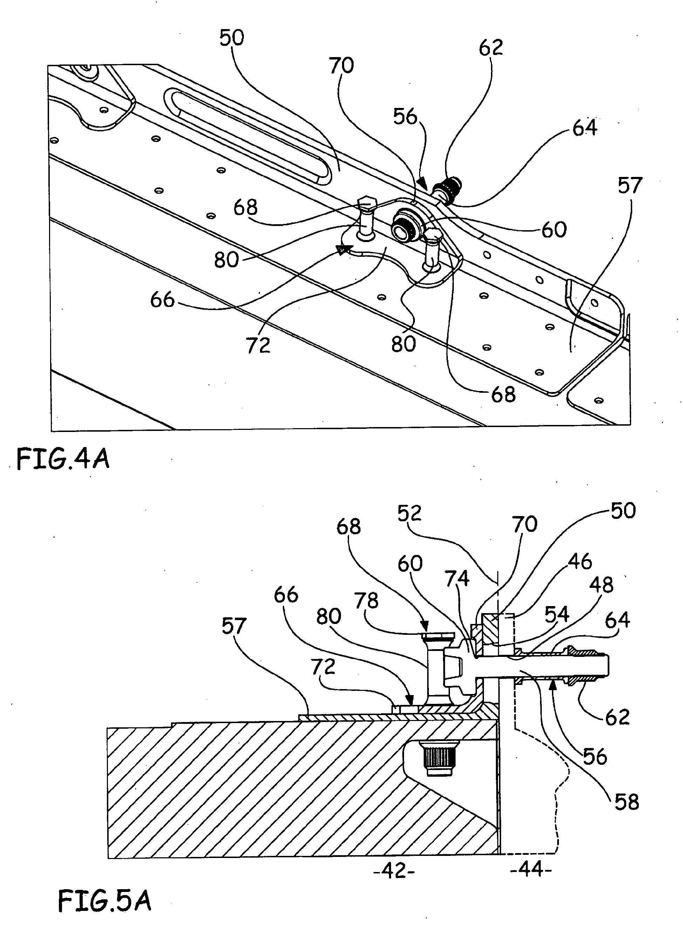

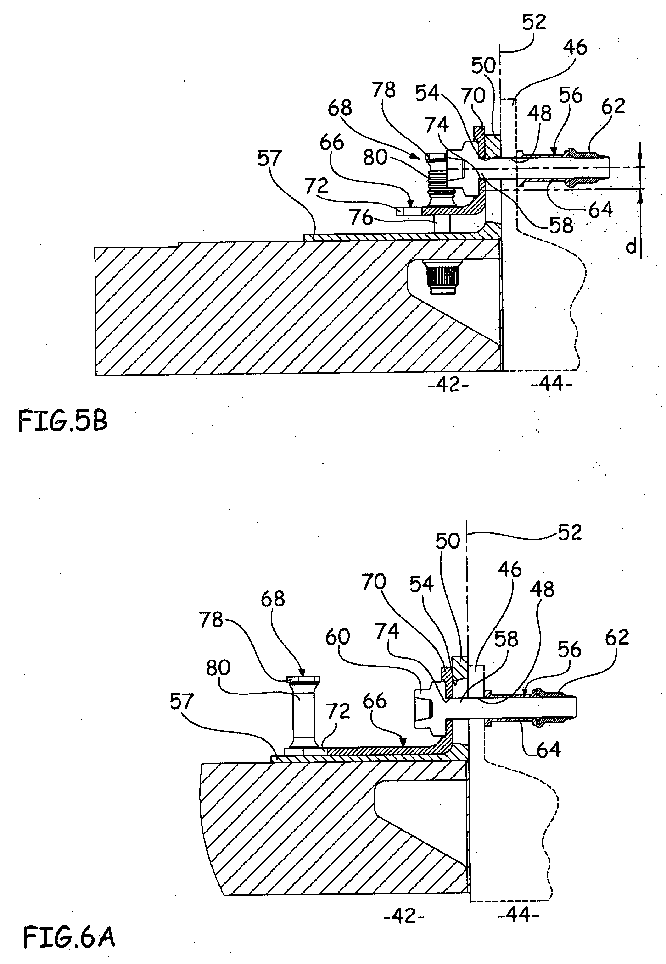

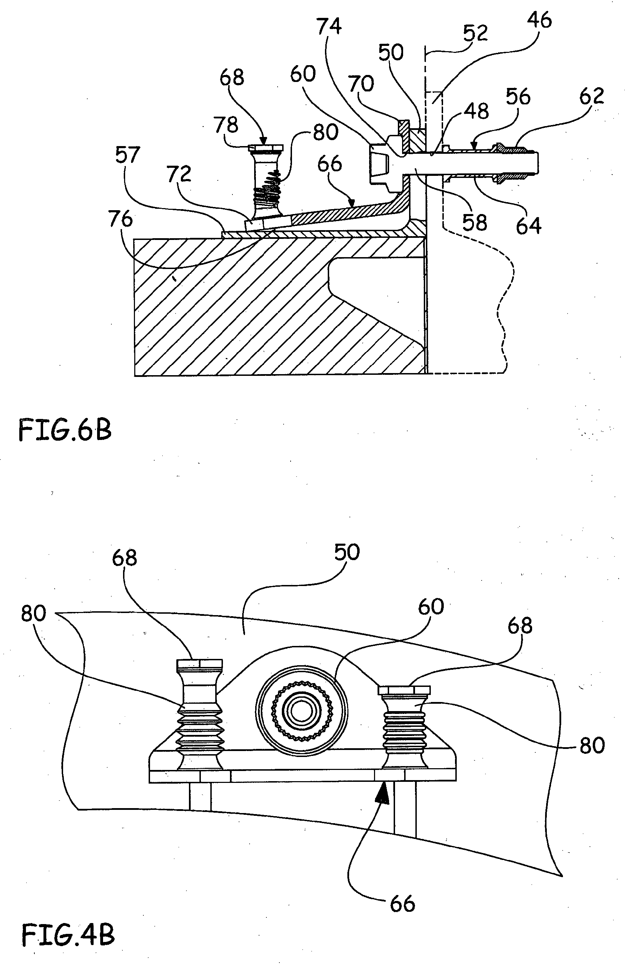

Sur les figures 5A, 5B, 6A et 6B, on a représenté en coupe la zone de jonction entre un premier conduit d'une entrée d'air 42 et un second conduit d'une motorisation 44 d'une nacelle d'aéronef les deux conduits étant disposés bout-à-bout. Le plan de coupe contient l'axe longitudinal de la nacelle et l'axe d'un élément de liaison.

Selon un mode de réalisation, le dispositif de liaison entre une motorisation et une entrée d'air comprend au niveau de la motorisation une collerette annulaire 46 s'étendant dans un plan sensiblement perpendiculaire à l'axe longitudinal de la nacelle et comportant une pluralité de trous de passage 48, au niveau de l'entrée d'air une collerette annulaire 50 s'étendant dans un plan sensiblement perpendiculaire à l'axe longitudinal de la nacelle, plaquée contre la collerette annulaire 46 de la motorisation au niveau d'un plan de jonction référencé 52 et comportant une pluralité de trous de passage 54 disposés au droit des trous de passage 48 de la motorisation et des éléments de liaison 56 répartis sur la périphérie des collerettes annulaires 46 et 50 logés dans les trous de passage 48 et 54.

Dans tous les cas, chaque collerette annulaire 46, 50 est solidaire d'une portion cylindrique adjacente 57.

Selon un mode de réalisation, la collerette annulaire peut être réalisée d'un seul tenant avec la motorisation ou l'entrée d'air. En variante, la collerette annulaire peut être une pièce indépendante, assemblée à la motorisation ou à l'entrée d'air. Selon un autre mode de réalisation, la collerette annulaire 50 solidaire de l'entrée d'air est réalisée d'un seul tenant avec une portion de cylindre de manière à former une bride avec une section en L dans un plan longitudinal, comme illustré sur la figure 4A. De la même manière, la collerette annulaire 50 peut s'étendre d'un seul tenant sur toute la circonférence ou être constituée de plusieurs secteurs angulaires comme illustré sur la figure 4A.

Chaque élément de liaison 56 comprend une tige 58 sous forme d'un cylindre avec à une première extrémité un premier appui 60 susceptible d'être plaqué contre la face libre d'une des collerettes, à l'occurrence la collerette annulaire 50 de l'entrée d'air, et à l'autre extrémité un second appui 62 susceptible d'être plaqué contre la face libre de l'autre collerette, à l'occurrence la collerette annulaire 46 de la motorisation.

Selon un mode de réalisation, un élément de liaison 56 peut se présenter sous la forme d'un boulon, avec d'une part une vis comportant une tige avec à une première extrémité une tête (correspondant au premier appui 60) et à l'autre extrémité un filetage, et d'autre part un écrou (correspondant au second appui 62) se vissant à l'extrémité de la vis.

En variante, l'élément de liaison peut se présenter sous la forme d'un rivet avec une tige comportant à une première extrémité une tête formant un premier appui et dont l'autre extrémité est déformée de manière à former le second appui.

Avantageusement, l'élément de liaison 56 comprend un fourreau déformable 64 qui peut être enfilé sur la tige 58 et interposé entre l'une des collerettes et l'un des appuis. Selon l'exemple illustré, le fourreau déformable 64 est intercalé entre la collerette annulaire 46 de la motorisation et l'appui 62 formé par un écrou de l'élément de liaison. Ce fourreau déformable 64 a un diamètre intérieur ajusté à celui de la tige 58 et comprend en partie centrale une épaisseur relativement faible de manière à pouvoir se déformer, notamment par flambage. Cet agencement permet d'augmenter l'énergie absorbée par déformation du dispositif de liaison et ainsi de limiter la propagation des déformations orientées selon la direction axiale.

L'invention propose un dispositif de liaison permettant d'absorber par déformation plastique et élastique une partie de l'énergie produite lors du choc d'un morceau de pale contre le conduit de la motorisation et de limiter la propagation des déformations, plus particulièrement les déformations radiales, entre le conduit de la motorisation et le conduit de l'entrée d'air.

L'agencement particulier de l'invention est décrit appliqué à la collerette annulaire 50 solidaire de l'entrée d'air. Il pourrait être appliqué à la collerette annulaire 46 solidaire de la motorisation.

Même s'il est décrit pour un élément de liaison, il s'applique à au moins un élément de liaison 56 et de préférence à tous les éléments de liaison 56.

Selon l'invention, le trou de passage 48 de la collerette annulaire 46 solidaire de la motorisation a un diamètre ajusté au diamètre de la tige 58 de l'élément de liaison 56. Ainsi, le mouvement relatif entre l'élément de liaison 56 et la collerette annulaire 46 est quasi nul. Par ajusté, on entend que le jeu entre le trou de passage 48 et la tige est inférieur ou égal à 2 mm.

En parallèle, le trou de passage 54 de la collerette annulaire 50 a un diamètre nettement supérieur à celui de la tige 58 de manière à permettre à ladite tige 58 un déplacement d supérieur ou égal à 5 mm.

Avantageusement, l'axe du trou de passage 54 est décalé vers l'extérieur par rapport à l'axe du trou de passage 48 de manière à obtenir la course la plus importante sachant que la tige 60 va se déplacer radialement vers l'extérieur en cas de bris d'une pale. En l'absence de déformation, comme illustré sur les figures 5A et 6A, la portion de la circonférence du trou de passage 54 la plus proche de l'axe longitudinal de la nacelle est sensiblement à la même hauteur que la portion correspondante de la circonférence du trou de passage 48 alors que la portion de la circonférence du trou de passage 54 la plus éloignée de l'axe longitudinal de la nacelle est décalée vers l'extérieur par rapport à la portion correspondante de la circonférence du trou de passage 48.

Selon l'invention, une cornière 66 est intercalée entre l'élément de liaison 56 et la portion cylindrique adjacente 57 à la collerette annulaire 50, ladite cornière 66 étant reliée à la portion de cylindre adjacente 57 par l'intermédiaire d'au moins un élément de liaison 68 susceptible d'amortir d'éventuelles déformations selon la direction radiale.

Selon un mode de réalisation, la cornière 66 a une section en L dans un plan longitudinal et comprend une première aile 70 plaquée contre la collerette annulaire 50 et une autre aile 72 plaquée contre la portion cylindrique adjacente 57 qui correspond dans le cas d'une bride à sa partie tubulaire.

La première aile 70 comprend un trou de passage 74 dont le diamètre est ajusté au diamètre de la tige 58 de l'élément de liaison 56. Ainsi, le mouvement relatif entre l'élément de liaison 56 et la cornière 66 est quasi nul.

La seconde aile 72 est reliée à la portion cylindrique adjacente 57 par l'intermédiaire d'au moins un élément de liaison 68. Avantageusement, on peut prévoir deux éléments de liaison 68 sensiblement identiques pour relier la cornière 66 à la portion cylindrique adjacente 57 comme illustré sur la figure 4A. Lors d'un éclatement de pale, les efforts subis par la liaison peuvent ne pas être purement radiaux et avoir une composante selon la direction tangentielle due à la vitesse de rotation des pales. L'agencement avec deux éléments de liaison 68 permet d'amortir également les éventuelles déformations selon la direction tangentielle grâce à une déformation dissymétrique des éléments de liaison 68 comme illustré sur la figure 4B.

En présence de deux éléments de liaison 68, la cornière 66 a une forme triangulaire avec des sommets arrondis lorsqu'elle est dépliée et mise à plat.

Selon un mode de réalisation, l'élément de liaison 68 comprend une tige 76, dont l'axe est orienté selon la direction radiale, fixe par rapport à l'entrée d'air et la collerette annulaire 50 avec à son extrémité supérieure une butée 78 sous forme d'une tête de vis ou d'un écrou par exemple.

La seconde aile 72 comprend un trou de passage pour la tige 76 dont le diamètre peut être ou non ajusté à celui de la tige 76.

Selon un point important de l'invention, un élément déformable 80 est intercalé entre la butée 78 et la seconde aile 72 de la cornière.

Selon un mode de réalisation, l'élément déformable 80 peut être un fourreau déformable fonctionnant de la même manière que le fourreau déformable 64.

En cas de bris d'une pale, le conduit de la motorisation tend à se déformer selon une direction radiale. Cette déformation radiale provoque un mouvement radial vers l'extérieur de l'élément de liaison 56. Le trou de passage 74 de la cornière 66 étant ajusté à celui de la tige de l'élément de liaison 56, la cornière 66 suit le mouvement radial vers l'extérieur de l'élément de liaison 56.

Compte tenu du diamètre important du trou de passage 54 de la collerette annulaire 50, le mouvement radial vers l'extérieur de l'élément de liaison 56 n'est pas transmis à la collerette 50 et donc à l'entrée d'air.

Comme illustré sur les figures 5B et 6B, l'élément déformable 80 en se déformant absorbe une partie de l'énergie ce qui tend à limiter le mouvement de la tige 58 de l'élément de liaison 56 qui ainsi ne subit pas de contraintes de cisaillement en venant en contact avec la paroi du trou de passage 54.

Cet agencement permet de limiter la propagation des déformations radiales vers l'entrée d'air.

L'invention n'est pas limitée au fourreau déformable comme illustré sur les figures. Ainsi, l'élément déformable 80 pourrait être un ressort de compression par exemple.

Selon l'invention, l'élément déformable 80 va générer un effort qui va tendre à s'opposer au mouvement radial vers l'extérieur de la cornière et donc de l'élément de liaison 56, cet effort étant proportionnel au déplacement radial Δ de l'élément de liaison.

Lorsque l'élément déformable 80 est un fourreau déformable comme illustré sur les figures 5A, 5B, 6A et 6B, sa hauteur est inversement proportionnelle à la distance séparant l'élément de liaison 68 de la première aile 70 de la cornière 66. En effet, lorsque l'élément de liaison 68 est éloigné de la première aile 70 comme illustré sur les figures 6A et 6B, la cornière 66 peut, en se déformant, plus particulièrement en se dépliant, absorber une partie de l'énergie de déformation et limiter le mouvement radial de l'élément de liaison 56 comme illustré sur la figure 6B. Dans ce cas, la déformation subie par l'élément déformable 80 est inférieure à celle subie par ce même élément dans la configuration des figures 5A et 5B si bien que la hauteur de l'élément déformable 80 peut être inférieure à celle du même élément dans la configuration des figures 5A et 5B.

A titre d'exemple, lorsque la distance séparant l'élément de liaison 68 et la première aile 70 de la cornière varie de 5 à 15 mm, l'élément déformable doit avoir une hauteur autorisant un débattement de l'ordre de 10 mm.

## Revendications

1. Nacelle d'aéronef comprenant un premier conduit d'une entrée d'air (42) et un second conduit d'une motorisation (44), les deux conduits étant disposés bout à bout et reliés par un dispositif de liaison qui comprend :
- une collerette annulaire (50) reliée à l'entrée d'air,
- une collerette annulaire (46) reliée à la motorisation plaquée contre ladite collerette annulaire (50) de l'entrée d'air,
- une pluralité de trous de passage (48, 54) ménagés dans les collerettes annulaires (46, 50) et disposés au droit les uns des autres
- des premiers éléments de liaison (56) comportant des tiges (58) logées dans les trous de passage (48, 54), permettant de relier lesdites collerettes annulaires (46, 50),
- au moins une cornière (66) reliée à une des collerettes annulaires (50) par un premier élément de liaison (56) et reliée à une portion cylindrique adjacente (57) à ladite collerette annulaire (50) par l'intermédiaire d'au moins un second élément de liaison (68) qui comprend une butée (78),
**caractérisée en ce que** le trou de passage (54) de la collerette annulaire (50) a un diamètre nettement supérieur à celui de la tige (58) du premier élément de liaison (56) pour permettre un débattement de ladite tige (58) en cas de déformation d'un des deux conduits et **en ce que** le second élément de liaison (68) comprend un élément déformable (80) configuré pour amortir d'éventuelles déformations selon la direction radiale et intercalé entre la cornière (66) est la butée (78) solidaire du second élément de liaison (68).

2. Nacelle selon la revendication 1, **caractérisée en ce que** le trou de passage (54) a un diamètre nettement supérieur à celui de la tige (58) permettant à ladite tige un déplacement supérieur ou égal à 5 mm.

3. Nacelle selon la revendication 1 ou 2, **caractérisée en ce que** l'axe du trou de passage (54) d'une première collerette annulaire (50) avec un diamètre élargi est décalé vers l'extérieur par rapport à l'axe du trou de passage (48) de l'autre collerette annulaire (46).

4. Nacelle selon l'une des revendications précédentes, **caractérisée en ce que** le second élément de liaison (68) comprend une tige (76) dont l'axe est orienté selon la direction radiale.

5. Nacelle selon l'une des revendications précédentes, **caractérisée en ce que** la cornière (66) comprend un trou de passage (74) ajusté au diamètre de la tige (58) du premier élément de liaison (56),

6. Nacelle selon l'une des revendications précédentes, **caractérisée en ce que** l'élément déformable (80) est tel qu'il génère un effort sur la cornière (66) qui va tendre à s'opposer au mouvement radial vers l'extérieur de ladite cornière (66), ledit effort étant proportionnel au déplacement du premier élément de liaison (56).

7. Nacelle selon l'une des revendications précédentes, **caractérisée en ce que** l'élément déformable (80) est un fourreau déformable avec une épaisseur en partie centrale relativement faible de manière à pouvoir se déformer.

8. Nacelle selon la revendication 7, **caractérisée en ce que** la hauteur du fourreau déformable est inversement proportionnelle à la distance séparant le second élément de liaison (68) de l'aile (70) de la cornière (66) plaquée contre la collerette annulaire (50).

9. Nacelle selon l'une des revendications précédentes, **caractérisée en ce que** la cornière (66) est reliée à la portion de cylindre adjacente (57) par l'intermédiaire de deux seconds éléments de liaison (68) disposés de manière symétrique par rapport au premier élément de liaison (56).

## Patentansprüche

1. Gondel eines Luftfahrzeugs mit einem ersten Kanal (42) eines Lufteinlasses und einem zweiten Kanal (44) einer Motorisierung, wobei die beiden Kanäle aneinandergefügt sind und durch eine Verbindungsvorrichtung verbunden sind, mit:
- einem ringförmigen Flansch (50), der mit dem Lufteinlass verbunden ist,
- einem ringförmigen Flansch (46), der mit der Motorisierung verbunden ist und an den ringförmigen Flansch (50) des Lufteinlasses angesetzt ist,
- einer Vielzahl von Durchführungen (48, 54), die in den ringförmigen Flanschen (46, 50) ausgebildet sind und einander gegenüberliegend angeordnet sind,
- ersten Verbindungselementen (56) mit Schäften (58), die sich in den Durchführungen (48, 54) befinden und es gestatten, die ringförmigen Flansche (46, 50) zu verbinden,
- wenigstens einem Winkelstück (66), das mit einem der ringförmigen Flansche (50) durch ein ersten Verbindungselement (56) verbunden ist und mit einem zylindrischen Abschnitt (57), der zum ringförmigen Flansch (50) benachbart ist, mittels wenigstens eines zweiten Verbindungselements (68) verbunden ist, das einen Anschlag (78) aufweist,
**dadurch gekennzeichnet, dass** die Durchführung (54) des ringförmigen Flansches (50) einen deutlich größeren Durchmesser als der Schaft (58) des ersten Verbindungselements (56) aufweist, um ein Verschieben des Schaftes (58) im Fall einer Verformung eines der beiden Kanäle zu gestatten, und dass das zweite Verbindungselement (68) ein verformbares Element (80) aufweist, das dazu eingerichtet ist, eventuelle Verformungen in radiale Richtung aufzunehmen und das zwischen dem Winkelstück (66) und dem am zweiten Verbindungselement (68) ausgebildeten Anschlag (78) angeordnet ist.

2. Gondel nach Anspruch 1, **dadurch gekennzeichnet, dass** die Durchführung (54) einen deutlich größeren Durchmesser als der Schaft (58) aufweist und dem Schaft eine Verschiebung größergleich 5 mm gestattet.

3. Gondel nach Anspruch 1 oder 2, **dadurch gekennzeichnet, dass** die Achse der Durchführung (54) eines ersten ringförmigen Flansches (50) mit vergrößertem Durchmesser bezüglich der Achse der Durchführung (48) des anderen ringförmigen Flansches (46) nach Außen versetzt ist.

4. Gondel nach einem der vorhergehenden Ansprüche, **dadurch gekennzeichnet, dass** das zweite Verbindungselement (68) einen Schaft (76) aufweist, dessen Achse in radiale Richtung ausgerichtet ist.

5. Gondel nach einem der vorhergehenden Ansprüche, **dadurch gekennzeichnet, dass** das Winkelstück (66) eine Durchführung (74) aufweist, die auf den Durchmesser des Schafts (58) des ersten Verbindungselements (56) eingestellt ist.

6. Gondel nach einem der vorhergehenden Ansprüche, **dadurch gekennzeichnet, dass** das verformbare Element (80) derart beschaffen ist, das es eine Beanspruchung des Winkelstücks (66) bewirkt, die dazu neigt, der nach außen gerichteten radialen Bewegung des Winkelstücks (66) entgegenzuwirken, wobei die Beanspruchung proportional zur Verschiebung des ersten Verbindungselements (56) ist.

7. Gondel nach einem der vorhergehenden Ansprüche, **dadurch gekennzeichnet, dass** das verformbare Element (80) ein verformbares Leerrohr mit einer im zentralen Bereich verhältnismäßig geringen Dicke ist, um eine Verformung zu ermöglichen.

8. Gondel nach Anspruch 7, **dadurch gekennzeichnet, dass** die Höhe des verformbaren Leerrohrs umgekehrt proportional zur Entfernung ist, die zwischen dem zweiten Verbindungselement (68) und dem Schenkel (70) des Winkelstücks (66) liegt, der gegen den ringförmigen Flansch (50) angesetzt ist.

9. Gondeln nach einem der vorhergehenden Ansprüche, **dadurch gekennzeichnet, dass** das Winkelstück (66) mit dem benachbarten zylindrischen Abschnitt (57) mittels zweier zweiter Verbindungselemente (68) verbunden ist, die bezüglich dem ersten Verbindungselement (56) symmetrisch angeordnet sind.

## Claims

1. Aircraft nacelle comprising a first conduit for an air inlet (42) and a second conduit for an engine (44), whereby the two conduits are arranged end to end and connected by a fastening device that comprises:
- an annular flange (50) attached to the air inlet,
- an annular flange (46) attached to the engine and locating against said annular flange (50) of the air inlet,
- a plurality of passage holes (48, 54) made in the annular flanges (46, 50) and arranged in line with each other,
- first fastening elements (56) comprising rods (58) housed in the passage holes (48, 54), to connect said annular flanges (46, 50),
- at least one angle profile (66) connected to one of the annular flanges (50) by a first fastening element (56) and connected to an adjacent cylindrical portion (57) of said annular flange (50) through the intermediary of at least one second fastening element (68) comprising a shoulder (78),
**characterized in that** the passage hole (54) of the annular flanges (50) has a diameter distinctly greater than the diameter of the rod (58) of the first fastening element (56) allowing said rod (58) to move in case of deformation of one of the two conduits, and **in that** the second fastening element (68) comprises a deformable element (80) for absorbing eventual deformations in radial direction and inserted between the angle profile (66) and the shoulder (78) solidly attached to the second fastening element (68).

2. Nacelle according to claim 1, **characterized in that** the passage hole (54) has a diameter distinctly greater than the diameter of the rod (58) allowing to said rod a displacement greater than or equal to 5 mm.

3. Nacelle according to claim 1 or 2, **characterized in that** the axis of the passage hole (54) of a first annular flange (50) with an enlarged diameter is offset towards the exterior relative to the axis of the passage hole (48) of the other annular flange (46).

4. Nacelle according to any of the preceding claims, **characterized in that** the second fastening element (68) comprises a rod (76) with axis oriented in radial direction.

5. Nacelle according to any of the preceding claims, **characterized in that** the angle profile (66) comprises a passage hole (74) adapted to the diameter of the rod (58) of the first fastening element (56).

6. Nacelle according to any of the preceding claims, **characterized in that** the deformable element (80) is designed so that it generates a force on the angle profile (66) with a tendency to oppose the radial movement towards the exterior of said angle profile (66), whereby said force is proportional to the displacement of the first fastening element (56).

7. Nacelle according to any of the preceding claims, **characterized in that** the deformable element (80) is a deformable bushing with relatively thin wall thickness in the central part so that it can deform.

8. Nacelle according to claim 7, **characterized in that** the height of the deformable bushing is inversely proportional to the distance separating the second fastening element (68) from the wing (70) of the angle profile (66) locating against the annular flange (50).

9. Nacelle according to any of the preceding claims, **characterized in that** the angle profile (66) is connected to the adjacent cylindrical portion (57) through the intermediary of two second fastening elements (68) arranged in symmetric manner relative to the first fastening element (56).
